# EUROPEAN PATENT APPLICATION

(11) **EP 2 311 621 A1**
(43) Date of publication of application: **20.04.2011**
(21) Application number: 09012934.7
(22) Date of filing: 13.10.2009
(51) Int. Cl.: B29C 33/38, B29L 31/08

(54) **Direct production of a negative mold for producing wind turbine blades**

(71) Applicant: Siemens Aktiengesellschaft, 80333 München (DE)
(72) Inventor: Stege, Jason, 7330 Brande (DK); Stiesdal, Henrik, 5000 Oense C (DK)

(57) **Abstract**

It is described a method for producing a negative mold (100, 200) for casting a wind turbine blade. The described method comprises directly producing the negative mold based on three dimensional data of the negative mold, wherein for producing the negative mold a milling machine is used. It is further described a manufacturing method for a wind turbine blade by means of the described negative mold. Further, it is described such a negative mold and a wind turbine blade, which has been produced with such a negative mold.

## Description

### Field of invention

The present invention relates to the technical field of producing blades for wind turbines. In particular, the present invention relates (a) to a method for producing a negative mold for casting a wind turbine blade and (b) to a manufacturing method for a wind turbine blade, wherein the mentioned negative mold is used. Further, the present invention relates (c) to a negative mold for casting a wind turbine blade and (d) to a wind turbine blade, which has been produced by the mentioned manufacturing method and/or by using the mentioned negative mold.

### Art Background

A blade for a rotor of a wind turbine is typically produced by means of a casting procedure. The casting procedure for a new type of wind turbine blade comprises (a) producing a positive mold representing a design model of the blade which is supposed to be produced, (b) producing a negative mold representing negative copy of the positive mold and (c) producing the blade by casting an appropriate blade material into the negative mold. Thereby, each step has to be finished before starting the next step.

In this document a positive mold is also denominated as a male mold, a positive form and/or a plug. A negative mold is also denominated as a female mold, a negative form and/or a casting mold.

The positive mold respectively the plug is typically produced by means of a milling process, which is accomplished by means of a large Computer Numerical Controlled (CNC) milling machine. Thereby, due to material properties a sub-frame for the positive mold is required having the general geometrical shape of the positive mold. On the sub-frame softer millable composite material layers are laid down between harder curable materials like fiberglass. Because of the large dimension of the positive mold such a milling process lasts typically 8 to 10 weeks.

Several complete passes of the milling process accomplished with the CNC milling machine are required in order to finish the sub-frame and most of the final surface of the positive mold. The last layer which is finished in the milling process is typically some form of epoxy paste. Due to a combination of the size of a milling head of the milling machine, the hardness of the used material and the length of the milling cutter, several parts of the positive mold surface must be hand sanded in order to precisely achieve the correct geometry. The area which later forms the surface of a flange connecting different pieces of the positive mold has to be treated with the highest preciseness.

Once the milling, sanding and surface finishing have been completed, the positive mold is shipped in one or several pieces to the location where the negative molds will be casted. For properly casting the negative mold each piece of the positive mold must be aligned and secured to the floor in a process that usually takes a team of workers four days per positive mold. If the positive mold comprises several pieces, after alignment, the connections between different pieces have to be repaired by hand and the corresponding surface is restored in a process which typically lasts several weeks.

Typically, when the negative mold is casted on the positive mold, it will be ready for transport in about 12 weeks. Once different pieces of the negative mold are placed in the correct location, another 4 days for precisely aligning the pieces with each other may be required.

### Summary of the Invention

There may be a need for facilitation the production of wind turbine blades in such a manner that the time being required for a blade production is decreased.

This need may be met by the subject matter according to the independent claims. Advantageous embodiments of the present invention are described by the dependent claims.

According to a first aspect of the invention there is provided a method for producing a negative mold for casting a wind turbine blade. The provided method comprises directly producing the negative mold based on three dimensional data of the negative mold, wherein for producing the negative mold a milling machine is used.

The described method is based on the idea that when directly using a milling machine, in particular a Computer Numerical Controlled (CNC) milling machine, the time consuming, elaborate and costly process of producing a positive mold of the wind turbine blade, which is supposed to be casted, can be completely omitted. This means that the negative mold is directly produced without before producing a corresponding positive mold.

The described negative mold production method allows for directly milling a negative mold for casting wind turbine blades. When omitting the creation of a positive mold the amount of time required to produce a new blade can be significantly reduced. The negative mold or at least portion(s) of the negative mold can be milled directly with a CNC milling machine having a large gantry, a large track and/or a large robotic arm. Of course, the negative mold should be made of a suitable material or of different suitable materials, which is capable of being machined with the used milling machine.

It is mentioned that the negative mold being used for producing the blade may comprise different pieces. This may be necessary not only because a wind turbine blade is a very large physical object having a lengths of for instance up to 58 m and, at the root of a rotor, a width of 2 m.

The negative mold or each piece of the negative mold may comprise a base and a closure head. By opening the closure head after the casting process and the curing process, the produced blade can be easily taken out from the negative mold.

According to an embodiment of the invention at least one inner surface of the negative mold is formed by the milling machine. This may provide the advantage that it is not necessary to produce the whole negative mold or a whole piece of the negative mold from one workpiece. The milling process, which may yield a very smooth inner surface, may be employed only there, where a precise material treatment is necessary. Of course, for a negative mold the shape of the inner surface, which defines the outer surface of the casted product (here the wind turbine blade), is required to be machined with a maximal accuracy.

According to a further embodiment of the invention at least one inner surface of the negative mold is formed by a pouring process. Thereby, an intermediate inner surface of the negative mold may be poured out by an appropriate pouring material. After finishing the described pouring process a top surface of the pouring material may represent the inner surface of the negative mold.

Pouring out the intermediate surface may result is a layer of pouring material, which could provide for a particular smooth outer surface representing the inner surface of the negative mold.

According to a further embodiment of the invention at least one inner surface of the negative mold is formed by a spraying process. By spraying out a cavity of the negative mold a comparatively thin layer having a very smooth top surface can be formed above an intermediate surface of the negative mold. Thereby, an outer surface of the sprayed layer may represent the inner surface of the negative mold.

According to a further aspect of the invention there is provided a manufacturing method for a wind turbine blade. The provided manufacturing method comprises (a) producing a negative mold by a method according to any one of the preceding claims, and (b) casting the wind turbine blade by using the negative mold.

Also the described wind turbine manufacturing method is based on the idea that when using a directly produced negative mold, the wind turbine blade production process can be speeded up significantly. This is the case in particular because the time consuming, elaborate and costly process of producing a positive mold of the wind turbine blade can be completely omitted.

According to an embodiment of the invention casting the wind turbine blade by using the negative mold comprises casting the wind turbine blade within the negative mold.

The casted wind turbine blade may be a blade being supposed to be used in reality for a power producing wind turbine. Alternatively, the casted wind turbine blade may be a blade prototype, which can be used for test purposes. Thereby, if the corresponding test or the corresponding tests will be successful, the prototype blade can serve as a template for the spatial design of further wind turbine rotor blades, which may be really used for a power production of a wind turbine.

According to a further embodiment of the invention casting the wind turbine blade by using the negative mold comprises (a) casting a positive mold of the wind turbine blade within the negative mold, (b) using the positive mold for producing at least one further negative mold, and (c) casting the wind turbine blade within the further negative mold.

This may mean that the final wind turbine blade is produced with a two-step casting process. First, the positive mold is casted within the (first) negative mold, which has been directly produced with the above described milling machine. Second, the wind turbine blade is produced within the further negative (second) mold, which has been produced in a traditional way by using the positive mold.

According to a further embodiment of the invention the manufacturing method further comprises (a) casting a prototype wind turbine blade within the negative mold and (b) testing the casted prototype wind turbine blade. Thereby, the casting of the prototype wind turbine blade and the testing of the casted prototype wind turbine blade may be carried out before the above described casting of the positive mold is carried out. Preferably, the casting of the positive mold is only carried out if the testing procedure yields a positive result. This may provide the advantage that a wind turbine blade is only produced, if before test(s) on a corresponding prototype show that the wind turbine blade, which is supposed to be produced, is suitable for practice.

According to a further aspect of the invention there is provided a negative mold for casting a wind turbine blade. The provided negative mold comprises a material having a surface, which has been directly produced by a milling machine based on three dimensional data of the negative mold.

The described negative mold is based on the idea that when directly using a milling machine, in particular a CNC milling machine, the time consuming, elaborate and costly process of producing a positive mold for the wind turbine blade can be completely omitted.

Preferably, at least one inner surface of the negative mold has been formed by the milling machine. Thereby, the inner surface of the negative mold may be a comparatively soft surface, which however is so hard that it can be processed respectively milled with the milling machine.

According to a further embodiment of the invention the negative mold further comprises (a) a frame providing the basic shape of the negative mold, (b) a fiberglass material being formed on the frame, and (c) a synthetic material being formed on the fiberglass material. Thereby, the surface of the synthetic material has been milled.

The frame may be made of or may comprise a metal material. The frame may provide for a reliable mechanical support for the negative mold.

The fiberglass material may be a fiberglass layer, which is formed on or above the frame. The fiberglass material may provide a large stiffness to the whole structure such that even very complicated geometrical shapes of the wind turbine blade can be formed. Further, the fiberglass layer may contribute to the positive fact that the negative mold will be able to withstand an increased number of castings.

The synthetic material may be a material being comparatively soft, in particular with respect to the fiberglass material. However, as has already been indicated above, the comparatively soft synthetic material has to have such a hardness, which allows the synthetic material to be processed by milling.

According to a further embodiment of the invention the synthetic material comprises epoxy.

The epoxy material may be a high density and/or high temperature epoxy foam. The epoxy material may have a density between 100 kg/m3 and 1000 kg/m3. Preferably, the epoxy material is a foam or a paste having a density of 250 kg/m3 or 600 kg/m3. This may provide the advantage that such epoxy foams are currently commercially available.

According to a further embodiment of the invention the synthetic material comprises several epoxy layers. In particular several epoxy layers, which are formed over each other, may provide the advantage that they represent a seal for the inner surface of the negative mold. This may prevent humidity from entering the wall or the cladding of the negative mold. Therefore, unwanted humidity induced contractions or expansions of the negative mold can be effectively avoided.

According to a further embodiment of the invention the negative mold further comprises a surface layer formed above the synthetic material. Thereby, the surface layer comprises at least one of the group of (a) a semi-permanent release agent, (b) Teflon and (c) a plastic bag material such as polypropylene or any other thermoplastic material.

The described surface layer may provide the advantage that in the casting process the negative mold and the casted wind turbine blade (real blade of prototype) are separated from each other. Hence, there is no direct contact between the negative mold and the casting such that there is no requirement to prepare a special inner surface of the negative mold. The described surface layer may further provide the advantage that after a casting has been finished the casted wind turbine blade can be easily removed from the negative mold.

Compared to a known release agent the semi-permanent release agent has the advantage that it will stay within the negative mold or on the inner surface of the negative mold at least for some castings. Therefore, a plurality of castings can be made before new semi-permanent release agent has to be added in order to replace the in the meantime consumed semi-permanent release agent.

In this respect it is mentioned that on top of the surface layer it is of course possible to apply a usual release agent. Such a release agent may further contributes that after a finished casting process the casted wind turbine blade can be easily removed from the negative mold.

According to a further aspect of the invention there is provided a wind turbine blade. The provided wind turbine blade has been produced (a) by performing the above described manufacturing method and/or (b) by using the above described negative mold.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 shows a sectional view of a negative mold in accordance with a first embodiment of the invention.
Figure 2 shows a sectional view of a negative mold in accordance with a second embodiment of the invention.

### Detailed Description

The illustration in the drawing is schematically. It is noted that in different figures, similar or identical elements are provided with reference signs, which are different from the corresponding reference signs only within the first digit.

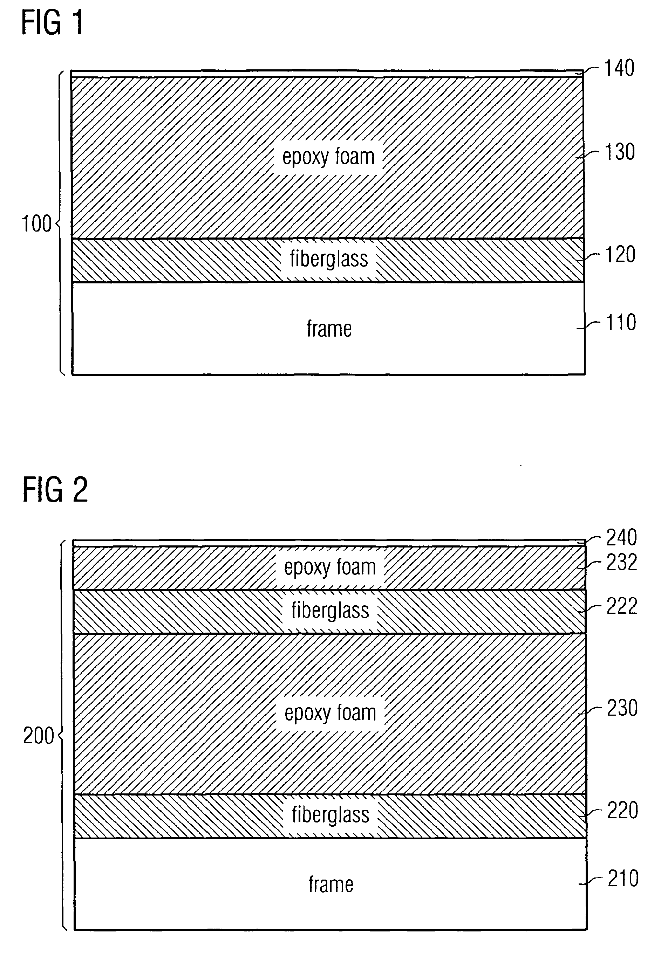

Figure 1 shows in a sectional view a negative mold 100. The negative mould comprises a frame structure 110, which is made from metal and which already has the basic shape of the negative mold 100. On top or above the frame 110 there is formed a fiberglass layer 120. The fiberglass layer 120 comprises a composite material being able to withstand high temperatures, which might occur during a casting process. On top or above the fiberglass layer 120 there is formed an epoxy foam 130. According to the embodiment described here the epoxy foam 130 is a high density and high temperature epoxy foam. For example a commercially available epoxy foam having a density of 250kg/m3 or 600kg/m3 can be used. On the epoxy foam 130 there has been processed a surface finish 140. According to the embodiment described here the surface finish 140 has been accomplished by a precise milling procedure of the epoxy foam 130.

It is mentioned that optionally one or more several epoxy layers may be introduced below or instead of the surface finish 140. Such epoxy layers may provide a seal for the negative mold. This may prevent humidity from entering the negative mold. Therefore, unwanted humidity induced contractions or expansions of the negative mold can be effectively avoided.

It is further mentioned that on the surface finish or on the epoxy foam (instead of the surface finish) there may be applied a semi-permanent release agent, which will stay within the negative mold and/or on the inner surface of the negative mold at least for some castings. As has already been mentioned above, the semi-permanent release agent may allow that a plurality of castings can be made before a new semi-permanent release agent has to be added in order to replace in the meantime consumed semi-permanent release agent.

The semi-permanent release agent may be for instance a water based semi-permanent release agent or a solvent based semi-permanent release agent. Preferably, a water based semi-permanent release agent is used because it may be non toxic and/or may allow for an easy handling without the need for specific handling equipment.

Furthermore, it is mentioned that on the surface finish or instead of the surface finish a Teflon layer or a plastic bag material such as polypropylene may be formed.

According to the embodiment described here the epoxy foam 130 has been applied to the frame 110 of the negative mold 100 in a pouring process. In such a pouring process the epoxy foam 130 can simply be poured across the fiberglass layer 120 until the desired surface height is reached.

Alternatively, in order to save on material and milling costs, a temporary mold for the epoxy foam can be made. Small epoxy foam blocks, precast to the correct height can be glued onto the fiberglass layer. The epoxy foam is then poured over the surface and then covered with a stiff yet flexible material such as polypropylene. The foam then expands to the correct height and the flexible portions of the negative mold can be removed.

In the following there will be mentioned some treatments which are also possible in order to realize a smooth inner surface of the negative mold:
(a) One or several sprayed epoxy layer(s) can be sanded in between different coatings.
(b) A layer of epoxy can be rolled on by hand and can be distributed by a silicon leveling tool.
(c) Coating the inner surface by using a spray gel.

As has already been mentioned above, on top of this smooth inner surface a semi-permanent release agent may be applied followed optionally by a Teflon layer.

Another method in order to realize a smooth inner surface of the negative mold is to simply use a "plastic bag" directly on top of the epoxy foam. The "plastic bag method" may be realized by a continuous sheet of polypropylene or some other thermoplastic, which is placed on the inner surface of the negative mold. In this case there will be no direct contact between the negative mold and the casting (i.e. the casted wind turbine blade) such that no special surface treatment is required.

In the following a possible process for realizing the negative mold 100 will be described (work description):
In a first step the frame 110 is prepared with a surface having approximately the same shape as the finished negative mold, minus the expected thicknesses of the epoxy foam 130 and the fiberglass layer 120.
In a second step the fiberglass layer 120 is added on top of the frame 110.
In a third step the epoxy foam 130 is poured onto the fiberglass layer 120. The pouring process can last until the desired foam thickness is reached. Alternatively, the pouring can be accomplished with the help of a temporary positive mold in order to create a very even thickness.
In a fourth step the epoxy foam 130 is milled into the correct and final shape.

Figure 2 shows in a sectional view a negative mold 200 according to a second embodiment of the invention. In accordance with the negative mold 100 shown is Figure 1, the negative mold 200 also comprises a (metal) frame 210, a fiberglass layer 220 formed on the frame 210 and an epoxy foam 230 formed on the fiberglass layer 220.

In contrast to the negative mold 100 shown in Figure 1 the negative mold 200 comprises additionally a further fiberglass layer 222 formed on the epoxy foam 230 and a further epoxy foam 232 formed on the further fiberglass layer 222. On the further epoxy foam 232 there has been processes a surface finish 240.

In the following a possible process for realizing the negative mold 200 will be described (work description). Thereby, reference is made to the first, the second and the third step of the above given work description for the negative mold 200, which are also carried out for producing the negative mold 200.
Following these three steps for realizing the negative mold 200 a fourth step is carried out with which the further layer of fiberglass 222 is added on top of the epoxy foam 230. This further fiberglass layer 222 gives more stiffness to the structure in order to be able to handle more challenging geometries or shapes for wind turbine blades. Furthermore, because of the provision of the further fiberglass layer 222 the final negative mold 200 will be able to withstand an increased number of castings.
In a fifth step being carried out for realizing the negative mold 200 the further epoxy foam 232 is added. According to the embodiment described here further epoxy foam 232 is much thinner than the epoxy foam 230. Therefore, the further epoxy foam 232 may be denominated an epoxy layer.
Finally, in a sixth step the final milling of the epoxy foam 232 is done. Thereby, the surface finish 240 is realized.

According to a further embodiment of the invention, which is not depicted in the drawing, a negative mold comprises the following sequence of materials:
1. A metal frame in the basic shape of the negative mold
2. A high temperature fiberglass layer
3. A high temperature epoxy foam
4. A milled surface on the epoxy foam
5. A high temperature fiberglass layer
6. A high density high temperature epoxy foam
7. One or several epoxy layers to seal the surface
8. A semi-permanent release agent
9. An optional Teflon layer

Thereby, the material layers 7, 8 and 9 may be assigned to the surface finish.

By using a directly milled negative mold which makes the traditional procedure of forming a positive mold respectively a plug superfluous, a new wind turbine blade can be casted and can be ready for testing in approximately half the time which is required to traditionally produce (a prototype of) a wind turbine blade.

Casting a blade in a directly milled negative mold produces a mold geometry that closer matches the original. Further, the angles of a negative mold can be milled more precisely than that of a positive mold, because the milling head of a milling machine has more clearance. This results in less hand finishing of the geometry of the negative mold.

In a preferred embodiment of the invention an epoxy foam is used as the inner surface of the negative mold that is prepared by a milling machine. Commercially available epoxy foam of 250kg/m3 and 600kg/m3 can be used.

An epoxy foam composite negative mold milled directly from a CNC machine may yield the following improvements:
(a) The negative mold may by a high temperature negative mold which is capable of withstanding approximately twice the temperature which a traditionally produced negative mold is able to sustain.
(b) The production of the directly produced negative mold is precisely repeatable by a recreation of a file including 3D data.
(c) Compared to the traditional process for producing a negative mold the described single step production process of the negative mold saves time and money.
(d) There is no need for a special storage of a positive mold.
(e) All components of the described negative mold are resistant to moisture.
(f) The directly produced negative mold can be realized with a simplified composite layer using only few raw materials.
(g) In a curing process only a very small mechanical tension occurs within the negative mold in particular if the above described materials are used. Therefore, a simplified frame structure can be used.

Negative molds that are worn out can easily be refurbished to the exact geometry by milling down the upper surface and pour out new layer of epoxy foam. This is a great improvement compared to prior art negative molds where one need to start from the bottom by building up a new negative mold by casting, wherein in the beginning a positive mold respectively a plug has to be used.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for producing a negative mold (100, 200) for casting a wind turbine blade, the method comprising
• directly producing the negative mold (100, 200) based on three dimensional data of the negative mold (100, 200), wherein for producing the negative mold (100, 200) a milling machine is used.

2. The method as set forth in the preceding claim, wherein at least one inner surface (140, 240) of the negative mold (100, 200) is formed by the milling machine.

3. The method as set forth in any one of the preceding claims, wherein
at least one inner surface (140, 240) of the negative mold (100, 200) is formed by a pouring process.

4. The method as set forth in any one of the preceding claims, wherein
at least one inner surface (140, 240) of the negative mold (100, 200) is formed by a spraying process.

5. Manufacturing method for a wind turbine blade, the manufacturing method comprising
• producing a negative mold (100, 200) by a method according to any one of the preceding claims, and
• casting the wind turbine blade by using the negative mold (100, 200).

6. The manufacturing method as set forth in claim 5, wherein casting the wind turbine blade by using the negative mold (100, 200) comprises
• casting the wind turbine blade within the negative mold (100, 200).

7. The manufacturing method as set forth in claim 5, wherein casting the wind turbine blade by using the negative mold (100, 200) comprises
• casting a positive mold of the wind turbine blade within the negative mold (100, 200),
• using the positive mold for producing at least one further negative mold, and
• casting the wind turbine blade within the further negative mold.

8. The manufacturing method as set forth in the preceding claim, further comprising
• casting a prototype wind turbine blade within the negative mold (100, 200) and
• testing the casted prototype wind turbine blade.

9. Negative mold for casting a wind turbine blade, the negative mold (100, 200) comprising
• a material having a surface (140, 240), which has been directly produced by a milling machine based on three dimensional data of the negative mold (100, 200).

10. The negative mold as set forth in the preceding claim, the negative mold further comprising
• a frame (110, 210) providing the basic shape of the negative mold,
• a fiberglass material (120, 220) being formed on the frame, and
• a synthetic material (130, 230) being formed on the fiberglass material (120, 220), wherein the surface (140, 240) of the synthetic material has been milled.

11. The negative mold as set forth in the preceding claims, wherein
the synthetic material comprises epoxy (130, 230).

12. The negative mold as set forth in the preceding claims 10 and 11, wherein the synthetic material comprises several epoxy layers (230, 232).

13. The negative mold as set forth in the preceding claims 10 and 12, further comprising
• a surface layer (240) formed above the synthetic material (230, 232),
wherein
the surface layer (240) comprises at least one of the group of
- a semi-permanent release agent,
- Teflon,
- plastic bag material such as polypropylene or any other thermoplastic material.

14. A wind turbine blade, wherein
the wind turbine blade has been produced
by performing the manufacturing method as set forth in any one of the preceding claims 5 to 8 and/or
by using the negative mold (100, 200) as set forth in any one of the preceding claims 9 to 13.
